# EUROPÄISCHE PATENTSCHRIFT

(11) **EP 2 508 925 B1**
(45) Veröffentlichungstag und Bekanntmachung des Hinweises auf die Patenterteilung: **12.06.2013**
(21) Anmeldenummer: 11002933.7
(22) Anmeldetag: 07.04.2011
(51) Int. Cl.: G02B 6/30

(54) **Optisches Kopplungssystem für zwei Lichtwellenleiter**
Optical coupling system for two waveguides
Système de couplage optique pour deux guides d'onde

(43) Veröffentlichungstag der Anmeldung: 10.10.2012
(73) Patentinhaber: Rosenberger-OSI GmbH & Co. OHG, 86167 Augsburg (DE); AT & S AG, 8700 Leoben (AT)
(72) Erfinder: Wurster, Clemens Dr., 86167 Augsburg (DE); Schmidt, Stefan, 83329 Waging (DE); Langer, Gregor Dr., 9061 Wölfnitz (AT); Stahr, Hannes, 8605 St. Lorenzen (AT)
(74) Vertreter: Zeitler - Volpert - Kandlbinder

(56) Entgegenhaltungen:
- DE-A1- 19 644 758
- JP-A- 2001 091 794
- US-A- 5 071 215
- US-A- 5 703 980
- US-B1- 6 217 231

## Beschreibung

Die vorliegende Erfindung betrifft ein optisches Kopplungssystem zum Koppeln eines ersten Lichtwellenleiters, welcher einen von einem ersten Mantel umgebenen ersten Kern aufweist, mit einem zweiten Lichtwellenleiter, welcher einen von einem zweiten Mantel umgebenen zweiten Kern aufweist, gemäß dem Oberbegriff des Anspruchs 1.

Leiterplatten mit integrierten optischen Signalverbindungen stellen die nächste Generation der Signalverbindung auf Boardebene dar. Die sogenannte optoelektronische Leiterplatte zielt auf die Realisierung hochkomplexer Applikationen ab, die eine weitere Miniaturisierung sowie Erhöhung der Integrationsdichte von Produktfeatures benötigen und damit in weiterer Folge eine höhere Produktwertschöpfung der Leiterplatte ermöglichen werden. Leiterplatten mit optischen Verbindungen werden dort zum Einsatz kommen, wo Applikationen höchste Datenströme zwischen Bauelementen, Modulen oder Funktionseinheiten (z.B. High-end-Computer Anwendungen), Störsicherheit gegen elektromagnetische Felder (z.B. Automobil- und Aeronautikanwendungen) oder ein Platz sparendes Design der Verbindungsstrecken (z.B. mobile Anwendungen) benötigen oder eine Energieeinsparung gegenüber widerstandsbehafteten Cu-Leiterbahnen erreicht werden soll.

Optische Datenübertragung im Langstreckenbereich ist schon seit mehreren Jahrzehnten bekannt. So werden in kontinentalen, in Großstadt- und in "Lokal Area"-Netzwerken seit vielen Jahren bereits Lichtfasern bzw. Lichtwellenleiter (LWL) zum Datentransfer eingesetzt. Der Einsatz von Lichtleitern, um Leiterplatten miteinander zu verbinden, oder sogar um integrierte optische Verbindungen innerhalb einer Leiterplatte zu realisieren, ist somit der nächste Schritt. Als optische Lichtleiter kommen Glas- oder Polymerfasern zum Einsatz, oder auch planare Polymer-Wellenleiter, an denen noch geforscht wird. Die planaren Polymer-Wellenleiter sind den Glasfasern im Bereich der optischen Dämpfung zwar unterlegen, was für kurze Entfernung, beispielsweise im Einsatz auf Leiterplatten, vertretbar ist, haben jedoch im Bereich der Prozessierbarkeit bzw. Herstellbarkeit, der Miniaturisierung, der Designfreiheit und nicht zuletzt der Kosten enorme Vorteile.

Die größte Herausforderung bei der Realisierung von integrierten optischen Verbindungen auf der Leiterplatte mittels optischen Wellenleitern (planare Wellenleitertechnologie) ist die Anbindung der Wellenleiterenden an optoelektronische Bauteile oder an optische Stecker-Module, die die Verbindung zur "Außenwelt", beispielsweise zu externen Glasfaserkabeln, herstellen.

JP 2001 091794 A offenbart ein optisches Kopplungssystem zum Koppeln eines ersten Lichtwellenleiters mit einem zweiten gemäß dem Oberbegriff des Anspruchs 1.

Der Erfindung liegt die Aufgabe zugrunde, eine Kopplung von zwei Lichtwellenleitern zu verbessern.

Diese Aufgabe wird erfindungsgemäß durch ein optisches Kopplungssystem der o.g. Art mit den in Anspruch 1 gekennzeichneten Merkmalen gelöst. Vorteilhafte Ausgestaltungen der Erfindung sind in den weiteren Ansprüchen beschrieben.

Bei einem optischen Kopplungssystem der o.g. Art ist es erfindungsgemäß vorgesehen, dass an einer Koppelstelle eine stirnseitige Endfläche des ersten Kerns des ersten Lichtwellenleiters an eine stirnseitige Endfläche des zweiten Kerns des zweiten Lichtwellenleiters anschlägt und der zweite Kern mit dem ersten Kern in axialer Richtung fluchtet, wobei im Bereich der Koppelstelle über mindestens einen Teil eines vorbestimmten axialen Abschnitts sowohl der zweite Mantel des zweiten Lichtwellenleiters als auch der erste Mantel des ersten Lichtwellenleiters gemeinsam ein Cladding des Lichtwellenleiters in dem vorbestimmten Abschnitt bilden.

Dies hat den Vorteil, dass die beiden zu koppelnden Lichtwellenleiter durch einfaches aneinanderschieben in mindestens zwei Richtungen im Raum exakt zueinander ausgerichtet sind.

Eine Kopplung von optischen planaren Polymerwellenleitern auf einer Leiterplatte mit Glas- oder Polymerfasern wird dadurch realisiert, dass der erste Lichtwellenleiter ein auf einer Leiterplatte ausgebildeter Polymerlichtwellenleiter ist, welcher einen von einem Polymermantel umgebenen Polymerkern aufweist.

Eine zusätzliche axiale Ausrichtung der zu koppelnden Lichtwellenleiter erzielt man dadurch, dass der zweite Lichtwellenleiter in eine Ferrule eingebettet ist, wobei an der Ferrule mindestens eine erste Führungsvorrichtung angeordnet ist, wobei an der Leiterplatte mindestens eine zweiten Führungsvorrichtung angeordnet ist, wobei die erste und zweite Führungsvorrichtung derart ausgebildet sind, dass diese zusammenwirkend eine axial fluchtende Positionierung des zweiten Kerns und des ersten Kerns in mindestens eine Richtung im Raum herstellen.

Eine einfache Herstellung der zweiten Führungsvorrichtung ggf. gleichzeitig im demselben Herstellungsprozess, insbesondere einem Lithographieprozess, wie dem Polymerlichtwellenleiter erzielt man dadurch, dass die zweite Führungsvorrichtung aus demselben Werkstoff hergestellt ist, wie der Polymerlichtwellenleiter.

Eine Kopplung von optischen planaren Polymerwellenleitern auf einer Leiterplatte mit externen signalverarbeitenden Vorrichtungen erzielt man dadurch, dass der zweite Lichtwellenleiter ein bezüglich der Leiterplatte externer Lichtwellenleiter mit einem Mantel und einem Lichtwellenleiterkern, insbesondere ein Glasfaser- oder Polymerfaserlichtwellenleiter, ist.

Eine besonders einfache und gleichzeitig präzise Herstellung von Anschlagflächen für die exakte Positionierung der zu koppelnden Lichtwellenleiter erzielt man dadurch, dass mindestens in einem Teil des vorbestimmten axialen Abschnittes der zweite Kern von dem zweiten Mantel derart befreit ist, dass eine ursprünglich dem zweiten Mantel zugewandte erste Fläche des zweiten Kerns frei liegt, und der erste Lichtwellenleiter von einem Teil des ersten Mantels und dem ersten Kern derart befreit ist, dass ein verbliebener Teil des ersten Mantels mit einer ursprünglich dem ersten Kern zugewandten zweiten Fläche frei liegt, wobei der zweite Kern mit der ersten Fläche an der zweiten Fläche des ersten Mantels anschlägt.

Eine weitere Vereinfachung der exakten Positionierung der zu koppelnden Lichtwellenleiter erzielt man dadurch, dass mindestens in einem Teil des vorbestimmten axialen Abschnittes der erste Kern von dem ersten Mantel derart befreit ist, dass eine ursprünglich dem ersten Mantel zugewandte dritte Fläche des ersten Kerns frei liegt, und der zweite Lichtwellenleiter von einem Teil des zweiten Mantels und dem zweiten Kern derart befreit ist, dass ein verbliebener Teil des zweiten Mantels des zweiten Lichtwellenleiters mit einer ursprünglich dem zweiten Kern zugewandten vierten Fläche frei liegt, wobei der erste Kern mit der dritten Fläche an der vierten Fläche des zweiten Mantels des zweiten Lichtwellenleiters anschlägt.

Die Erfindung wird im Folgenden anhand der Zeichnung näher erläutert. Diese zeigt in:
- Fig. 1: einen Polymerlichtwellenleiter auf einer Leiterplatte in schematischer Schnittansicht,
- Fig. 2: eine beispielhafte Ausführungsform eines erfindungsgemäßen optischen Kopplungssystems in schematischer Schnittansicht in einem ersten Montagezustand,
- Fig. 3: die Ausführungsform des erfindungsgemäßen optischen Kopplungssystems gemäß Fig. 2 in schematischer Schnittansicht in einem zweiten Montagezustand,
- Fig. 4: den Polymerlichtwellenleiter auf einer Leiterplatte gemäß Fig. 1 in Aufsicht und
- Fig. 5: eine beispielhafte Ausführungsform einer in Fig. 2 und 3 lediglich schematisch dargestellten Ferrule mit Glasfaserlichtwellenleiter in schematischer Aufsicht.

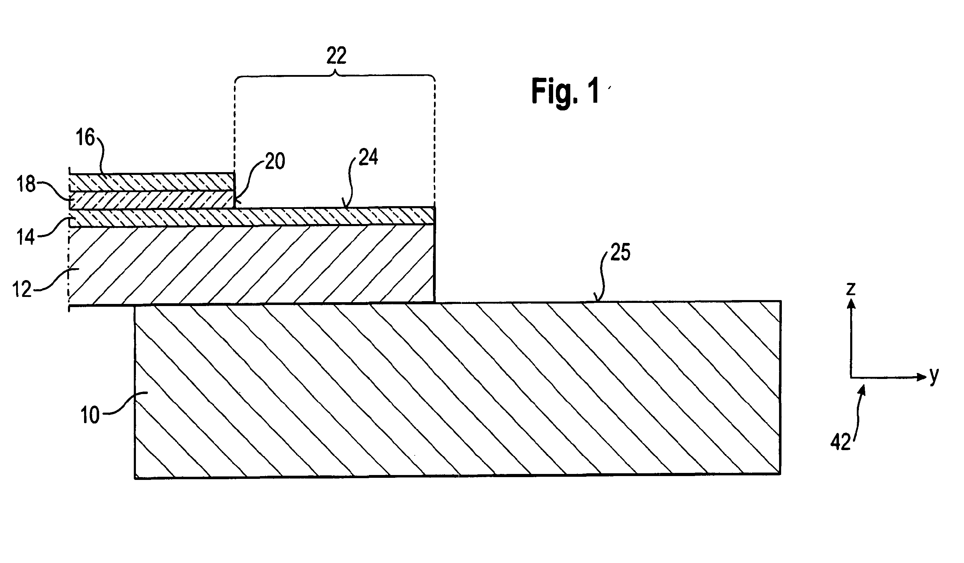

Fig. 1 zeigt einen Polymerlichtwellenleiter, welcher auf einer Leiterplatte mit einem starren Substrat 10 und einer weiteren Schicht 12 ausgebildet ist. Die Schichten 10, 12 können alternativ auch aus einem Leiterplattenteil gefertigt sein. Der Polymerlichtwellenleiter ist auf der Schicht 12 als planare Struktur aufgebaut und umfasst einen ersten Polymermantel 14 sowie einen zweiten Polymermantel 16 zwischen denen ein Polymerkern 18 angeordnet ist. Der Polymerkern 18 und die Polymermäntel 14, 16 sind aus demselben polymeren Werkstoff hergestellt. Der Werkstoff des Polymerkerns 18 weist einen höheren Brechungsindex als der Werkstoff der Polymermäntel 14, 16 auf, wodurch der Lichtwellenleiter definiert ist.

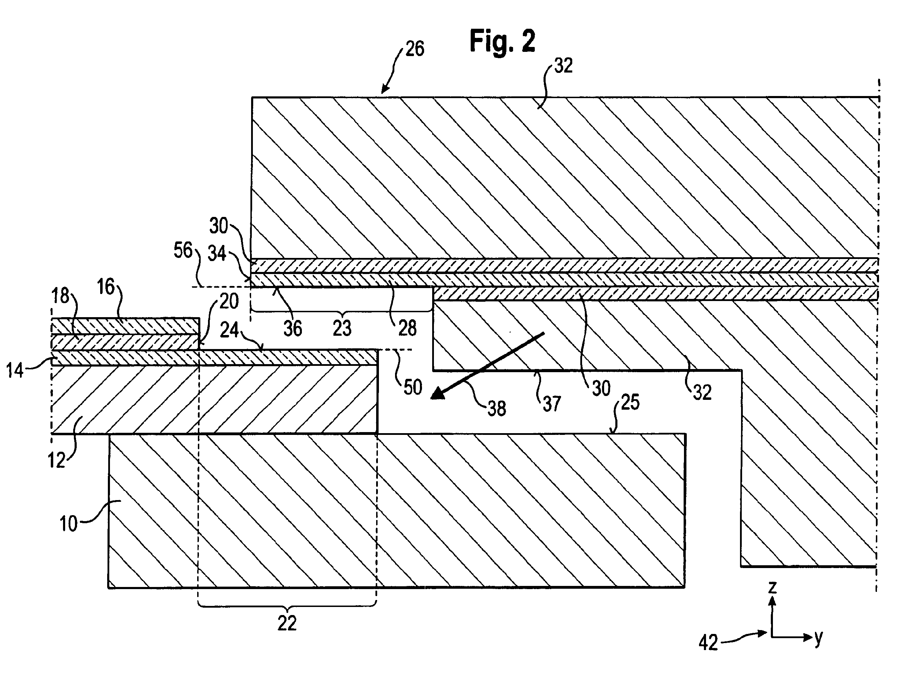

Erfindungsgemäß ist der Polymerlichtwellenleiter benachbart zu einer stirnseitigen Endfläche 20 des Polymerkerns 18 über einen Teil 22 eines vorbestimmten axialen Abschnittes 23 (Fig. 2) von dem zweiten Polymermantel 16 und dem Polymerkern 18 befreit, so dass eine zweite Fläche 24 des ersten Polymermantels 14, welche ursprünglich dem Polymerkern 18 zugewandt war, frei liegt. Alternativ ist der Polymerlichtwellenleiter direkt mit einer entsprechenden "Stufe" hergestellt.

Fig. 2 veranschaulicht einen Glasfaserlichtwellenleiter 26 mit einem Glasfaserkern 28 und einem Mantel 30, welcher in einer Ferrule 32 angeordnet ist. Erfindungsgemäß ist der Glasfaserlichtwellenleiter 26 über einen vorbestimmten axialen Abschnitt 23, welcher in axialer Richtung länger ist als der Teil 22 des vorbestimmten axialen Abschnitt 23, benachbart zu einer stirnseitigen Endfläche 34 des Glasfaserkerns 28 von einem Teil des Mantels 30 befreit, so dass eine erste Fläche 36 des Glasfaserkerns 28, welche ursprünglich dem Mantel 30 zugewandt war, frei liegt.

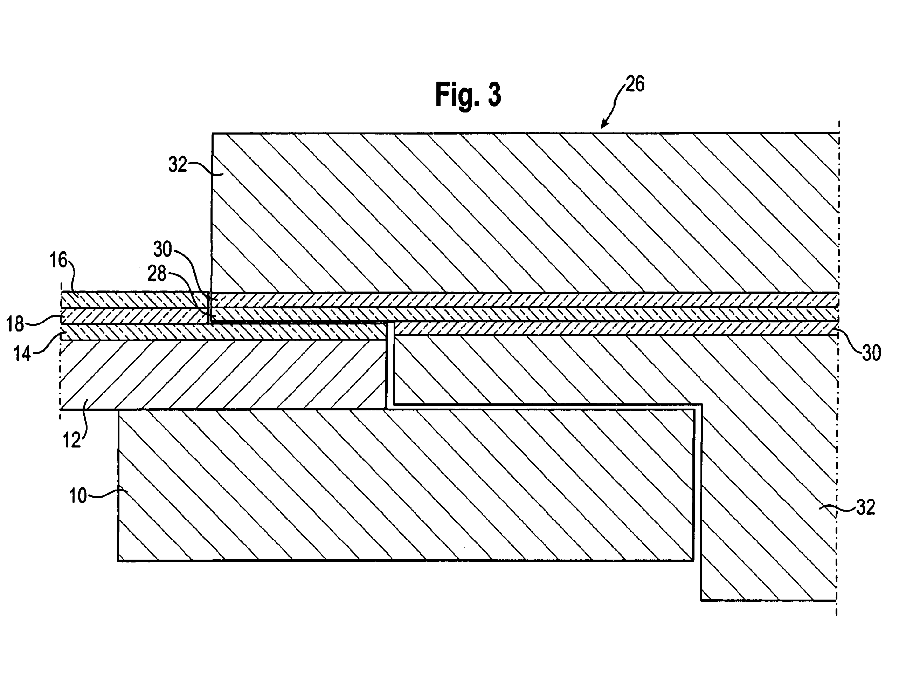

Zum Herstellen eines erfindungsgemäßen Kopplungssystems, welches den Polymerlichtwellenleiter 14, 16, 18 und den Glasfaserlichtwellenleiter 26 lichtleitend bzw. optisch miteinander verbindet, wird die Ferrule 32 mit dem wie oben beschrieben präparierten Glasfaserlichtwellenleiter 26 auf die Leiterplatte 10, 12 mit dem wie oben beschrieben präparierten Polymerlichtwellenleiter 14, 16, 18 aufgeschoben, wie mit Pfeil 38 in Fig. 2 angedeutet, so dass die die erste und zweite Fläche 24, 36 einander zugewandt sind bzw. aneinander anschlagen. Dieser Zustand ist in Fig. 3 veranschaulicht. Zum optischen Verbinden ist optional zusätzlich eine Klebeschicht (nicht dargestellt) zwischen der stirnseitigen Endfläche 20 des Polymerkerns 18 und der stirnseitigen Endfläche 34 des Glasfaserkerns 28 angeordnet. Erfindungsgemäß ist damit der Glasfaserkern 28 direkt mit dem Polymerkern 18 optisch gekoppelt. Zur mechanischen Verbindung ist optional eine Klebeschicht zwischen einer Fläche 25 des starren Substrats 10 und einer Fläche 37 der Ferrule 32 vorgesehen.

Mit anderen Worten ist jeweils der Polymerlichtwellenleiter 14, 16, 18 über den Teil 22 und der Glasfaserlichtwellenleiter 26 über den Abschnitt 23 gestuft ausgebildet, wobei der Abschnitt 23 länger ist als der Teil 22. Hierdurch schlagen die stirnseitigen Endflächen 20, 34 sicher aneinander an.

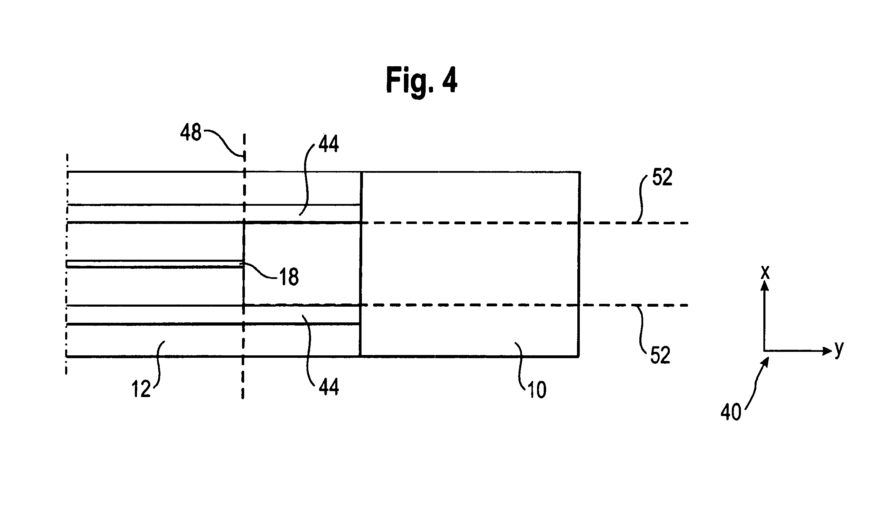

Fig. 4 zeigt die Leiterplatte 10, 12 mit Polymerlichtwellenleiter in Aufsicht. Weiterhin veranschaulicht ein x-y-Achsenkreuz 40 in Fig. 4 zwei Richtungen im Raum, nämlich eine x-Richtung und eine y-Richtung, die senkrecht aufeinander stehen und die Blattebene der Fig. 4 aufspannen. Eine dritte Richtung z ist senkrecht zur Blattebene von Fig. 4 ausgerichtet. Diese ist aus einem z-y-Achsenkreuz 42 in Fig. 1 bzw. 2 ersichtlich. Die zweite Fläche 24 bildet eine exakte Positionierung der beiden zu koppelnden Lichtwellenleiter in z-Richtung. Die aneinander anschlagenden stirnseitigen Endflächen 20, 34 bilden eine exakte Positionierung der beiden zu koppelnden Lichtwellenleiter in y-Richtung.

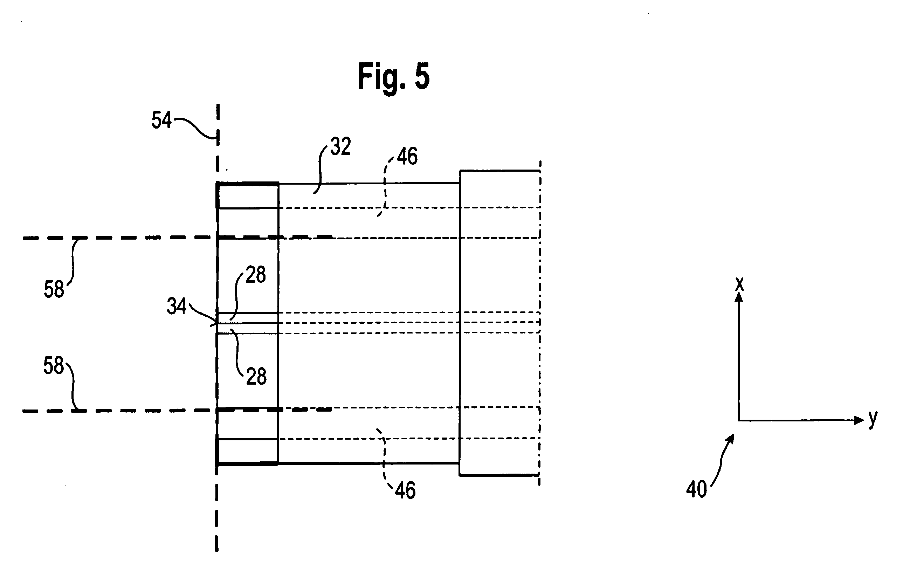

Zur exakten Positionierung der beiden zu koppelnden Lichtwellenleiter in x-Richtung sind Seitenführungsstrukturen 44 auf der Leiterplatte bzw. der Schicht 12 der Leiterplatte ausgebildet, wie aus Fig. 4 ersichtlich. Diese Seitenführungsstrukturen 44 wirken mit Führungsbohrungen 46 zusammen, die in der Ferrule 32 ausgebildet sind, wie aus Fig. 5 ersichtlich.

Die Erfindung betrifft eine steckbare, optische Schnittstelle und geht von der Leiterplatte 10, 12 mit dem planaren Polymerwellenleitersystem 14, 16, 18 aus, wobei dieses am Wellenleiterende, das an eine Lichtfaser gekoppelt werden soll, ein spezielles Stufendesign aufweist. Die mit dem Polymerlichtwellenleitersystem 14, 16, 18 optisch und mechanisch zu verbindende zweite Komponente des optischen Koppelsystems ist in der dargestellten Ausführungsform eine mit mindestens einem Glasfaserwellenleitersystem 30, 34 in herkömmlicher Weise verbundene MT-Ferrule (genormt nach IEC 61754-5) oder ein ähnliches Element, wobei die Ferrule 32 mit dem Glasfaserlichtwellenleitersystem 30, 34 und das Polymerlichtwellenleitersystem 14, 16, 18 derart bearbeitet sind, dass diese ein Stufendesign aufweisen (Fig. 1 und 2). Beide Komponenten (Leiterplatte 10, 12 und beispielhaft die MT-Ferrule 32) lassen sich nun exakt ineinander schieben, sodass eine optimale optische Kopplung zwischen dem Polymerwellenleiter 14, 16, 18 auf der Leiterplatte 10, 12 und dem Glasfaserwellenleiter 26 in der beispielhaft verwendeten MT-Ferrule 32 ergibt. Zur Fixierung werden die beiden Komponenten beispielsweise, d.h. Polymerwellenleiter 14, 16, 18 auf der Leiterplatte 10, 12 und Glasfaserwellenleiter 26 in der Ferrule 32, aneinander geklebt.

Beide Komponenten weisen folgende Eigenschaften auf: Wellenleiterendflächen bzw. stirnseitige Endflächen 20, 34 des Polymerkens 18 und des Lichtwellenleiterkerns 28 mit sehr hohen optischen Qualitäten, Referenzmarken oder Führungen 44, 46, damit die Komponenten exakt zu den Wellenleitern ausgerichtet sind und Kavitäten in der Leiterplatte (siehe Fläche 25), in denen die Komponenten mechanisch befestigt werden. Dieses Konzept ist sowohl für Mehrmoden- als auch für Einmodenlichtwellenleiter geeignet.

Erfindungsgemäß wird somit ein Interfacekonzept (optisches Kopplungssystem) vorgeschlagen, das eine direkte optische Kopplung zwischen dem planaren Polymerwellenleiter 14, 16, 18 auf der Leiterplatte 10, 12 und einem Glasfaserwellenleiter 26 beispielhaft in einer MT-Ferrule 32 vorgeschlagen.

Die Leiterplatte 10, 12 weist planare optische Wellenleiter 14, 16, 18 auf. Sie umfasst das starre Substrat 10, wie beispielsweise FR4, und eine weitere Schicht 12, die ebenfalls starr oder aber auch flexibel, beispielsweise aus Polyimid, ausgebildet ist. Auf der Schicht 12 sind die optischen Wellenleiter 14, 16, 18 aufgebracht, die einen flächig aufgebrachten Polymermantel (Cladding) 14, einen strukturierten Wellenleiterkern bzw. Polymerkern 18 und einen weiteren, wiederum flächig aufgebrachten Polymermantel (Cladding) 16 aufweisen. Die Polymermäntel bzw. Cladschichten 14 und 16 sind aus demselben Werkstoff hergestellt. Der Werkstoff des Wellenleiterkerns 18 weist einen höheren Brechungsindex als der Werkstoff der Cladschichten 14, 16 auf, wodurch der Polymerlichtwellenleiter definiert ist. Weiterhin sind Seitenführungsstrukturen 16 aufgebracht, die aus demselben Werkstoff und im selben Lithographieprozess wie die Polymerlichtwellenleiter 14, 16, 18 hergestellt sind.

Die Leiterplatte 10, 12 ist derart aufgebaut, dass folgende drei Strukturmerkmale die Position einer zu koppelnden Komponente relativ zu dem Polymerwellenleiterkern 18 genau definieren: Die Position in y-Richtung wird über eine erste Ebene 48 (Fig. 4, 5) definiert, indem das zu koppelnde Teil bis zum Anschlag zur stirnseitigen Endfläche 20 geführt wird. Die Position in z-Richtung wird über eine zweite Ebene 50 (Fig. 2) eingestellt, die von der zweiten Fläche 24 definiert ist. Die Position in x-Richtung wird über eine dritte Ebenen 52 bzw. die Seitenführungsstrukturen 44 eingestellt. Da diese drei Positionsstrukturen 48, 50 und 52 nicht indirekt über Marker bestimmt sind, sondern direkt mit den Wellenleiterstrukturen in Verbindung stehen, wird eine sehr genaue Ausrichtung zwischen den zu koppelnden Lichtwellenleitern realisiert.

Ein Ausführungsbeispiel für einen Glasfaserlichtwellenleiter ist eine Standard-MT-Ferrule 32, wie in Fig. 5 dargestellt. Diese Standard-MT-Ferrule 32 weist die Führungsbohrungen 46 auf. Zusätzlich wird sie an der stirnseitigen Endfläche nach bekannter Art und Weise poliert, sodass auch die in der Ferrule 32 eingesetzten Fasern an den Enden 34 eine optisch hochwertige Stirnfläche aufweisen. Ein zusätzliches Merkmal der Ferrule 32 ist die Stufe, welche beispielsweise durch Schleifen und Polieren hergestellt ist, wobei die Tiefe der Stufe durch die Oberseite 36 des Faserkerns 28 definiert ist, und somit eine vierte Ebene 54 ausbildet. Die vierte Ebene 54 definiert bei einer Kopplung mit dem Polymerlichtwellenleiter 14, 16, 18 auf der Leiterplatte 10, 12 die Position in y-Richtung und ist somit das Gegenstück zur ersten Ebene 48. Eine fünfte Ebene 56 (Fig. 2) definiert die Position in z-Richtung und ist das Gegenstück zur zweiten Ebene 50. Durch die in der MT-Ferrule 32 bereits vorhandenen, sehr präzise ausgeformten Führungsbohrungen 46 werden sechste Ebenen 58 und somit die Position in x-Richtung definiert (Gegenstück zur dritten Ebene 52).

Die beiden Komponenten Ferrule 32 und Leiterplatte 10, 12 können leicht aufeinander geschoben werden und bilden nun das optische Koppelsystem. Der Polymerkern 18 des planaren Polymerlichtwellenleiters 14, 16, 18 auf der Leiterplatte 19, 12 und die Glasfaserkerne 28 der Glasfasern in der MT-Ferrule 32 werden in den Positionen x, y und z exakt aufeinander positioniert. Im Bereich der Anlage der beiden Flächen 25 und 37 können die beiden Komponenten aneinander geklebt werden, um eine mechanische Stabilisierung zu erreichen. Zwischen dem planaren Wellenleiterende (stirnseitige Endfläche 20) und Faserende (stirnseitigen Endfläche 34) kann ebenfalls ein optischer Kleber eingebracht werden, der einen für die Wellenleiterkerne 18, 28 passenden Brechungsindex aufweist und gegebenenfalls einen Luftspalt verhindert.

Durch die Erfindung ist es möglich, dass eine optische Leiterplatte (Leiterplatte 10, 12 mit planarem optischen Polymerlichtwellenleiter 14, 16, 18) mit Glas- oder Polymerfasern eines Glasfaserlichtwellenleiters über eine modifizierte Standard-MT-Ferrule 32 oder einem ähnlich gestaltetem Element passiv optisch gekoppelt wird. Durch dieses optische Interface können optische Leiterplatten, die in Zukunft einen immer wichtigeren Stellenwert in der optischen Datenübertragung einnehmen werden, mit Standardlichtfasern, die bereits seit Jahrzehnten im Einsatz sind, gekoppelt werden.

Diese Erfindung kann für alle optischen Anwendungen zum Einsatz kommen, in denen ein Polymerwellenleiter auf der Leiterplatte über ein Koppelmodul mit z.B. einer Lichtfaser verbunden werden soll. Das Einsatzgebiet reicht von Datenübertragungslösungen im High End Computerbereich über Fiber-to-the-Home Anwendungen bis zu optischen Kopplungssystemen für den Entertainment Bereich.

Erfindungsgemäß wird ein passives Kopplungssystem einer Lichtfaser an einen Polymerwellenleiter auf einer Leiterplatte mit Strukturen zum exakten Ausrichten im Raum, d.h. in drei aufeinander senkrecht stehenden Richtung, zur Verfügung gestellt.

## Patentansprüche

1. Optisches Kopplungssystem zum Koppeln eines ersten Lichtwellenleiters (14, 16, 18), welcher einen von einem ersten Mantel (14, 16) umgebenen ersten Kern (18) aufweist, mit einem zweiten Lichtwellenleiter (26), welcher einen von einem zweiten Mantel (30) umgebenen zweiten Kern (28) aufweist, wobei an einer Koppelstelle eine stirnseitige Endfläche (20) des ersten Kerns (18) des ersten Lichtwellenleiters (14, 16, 18) an eine stirnseitige Endfläche (34) des zweiten Kerns (28) des zweiten Lichtwellenleiters (28, 30) anschlägt und der zweite Kern (28) mit dem ersten Kern (18) in axialer Richtung fluchtet, wobei im Bereich der Koppelstelle über mindestens einen Teil (22) eines vorbestimmten axialen Abschnitts (23) sowohl der zweite Mantel (30) des zweiten Lichtwellenleiters (28, 30) als auch der erste Mantel (16) des ersten Lichtwellenleiters (14, 16, 18) gemeinsam ein Cladding des Lichtwellenleiters in dem vorbestimmten Abschnitt (22) bilden, wobei der erste Lichtwellenleiter (14, 16, 18) ein auf einer Leiterplatte ausgebildeter Polymerlichtwellenleiter ist, welcher einen von einem Polymermantel (14, 16) umgebenen Polymerkern (18) aufweist,
**dadurch gekennzeichnet,**
**dass** der zweite Lichtwellenleiter (28, 30) in eine Ferrule (32) eingebettet ist, wobei an der Ferrule (32) mindestens eine erste Führungsvorrichtung (46) angeordnet ist, wobei an der Leiterplatte (10, 12) mindestens eine zweite Führungsvorrichtung (44) angeordnet ist, wobei die erste und zweite Führungsvorrichtung (46, 44) derart ausgebildet sind, dass diese zusammenwirkend eine axial fluchtende Positionierung des zweiten Kerns (28) und des ersten Kerns (18) in mindestens eine Richtung im Raum herstellen, wobei die zweite Führungsvorrichtung (44) aus demselben Werkstoff hergestellt ist, wie der Polymerlichtwellenleiter (14, 16, 18).

2. Optisches Kopplungssystem nach Anspruch 1, **dadurch gekennzeichnet, dass** der zweite Lichtwellenleiter (28, 30) ein bezüglich der Leiterplatte (10, 12) externer Lichtwellenleiter mit einem Mantel (30) und einem Lichtwellenleiterkern (28), insbesondere ein Glasfaser- oder Polymerfaserlichtwellenleiter, ist.

3. Optisches Kopplungssystem nach mindestens einem der vorhergehenden Ansprüchen, **dadurch gekennzeichnet, dass** in dem vorbestimmten axialen Abschnittes (23) der zweite Kern (28) von dem zweiten Mantel (30) derart befreit ist, dass eine ursprünglich dem zweiten Mantel (30) zugewandte erste Fläche (36) des zweiten Kerns (28) frei liegt, und der erste Lichtwellenleiter (14, 16, 18) von einem Teil des ersten Mantels (14, 16) und dem ersten Kern (18) derart befreit ist, dass ein verbliebener Teil (14) des ersten Mantels (14, 16) mit einer ursprünglich dem ersten Kern (18) zugewandten zweiten Fläche (24) frei liegt, wobei der zweite Kern (28) mit der ersten Fläche (36) an der zweiten Fläche (24) des ersten Mantels (14) anschlägt.

4. Optisches Kopplungssystem nach mindestens einem der vorhergehenden Ansprüchen, **dadurch gekennzeichnet, dass** mindestens in einem Teil (22) des vorbestimmten axialen Abschnittes (23) der erste Kern (18) von dem ersten Mantel (14, 16) derart befreit ist, dass eine ursprünglich dem ersten Mantel (14, 16) zugewandte dritte Fläche des ersten Kerns (18) frei liegt, und der zweite Lichtwellenleiter (28, 30) von einem Teil des zweiten Mantels (30) und dem zweiten Kern (28) derart befreit ist, dass ein verbliebener Teil des zweiten Mantels (30) des zweiten Lichtwellenleiters (28, 30) mit einer ursprünglich dem zweiten Kern (28) zugewandten vierten Fläche frei liegt, wobei der erste Kern (18) mit der dritten Fläche an der vierten Fläche des zweiten Mantels (30) des zweiten Lichtwellenleiters (28, 30) anschlägt.

## Claims

1. Optical coupling system for coupling a first light guide (14, 16, 18), which has a first core (18) surrounded by a first sheath (14, 16), to a second light guide (26), which has a second core (28) surrounded by a second sheath (30), a leading end-face (20) of the first core (18) of the first light guide (14, 16, 18) butting against a leading end-face (34) of the second core (28) of the second light guide (28, 30) at a point of coupling, and the second core (28) being aligned with the first core (18) in the axial direction, both the second sheath (30) of the second light guide (28, 30) and the first sheath (16) of the first light guide (14, 16, 18) together forming, in the region of the point of coupling and over a part (22) of a predetermined axial portion (23), a cladding for the light guide at the predetermined portion (22), the first light guide (14, 16, 18) being a polymer light guide, formed on a printed circuit board, which has a polymer core (18) surrounded by a polymer sheath (14, 16), **characterised in that** the second light guide (28, 30) is embedded in a ferrule (32), at least one first guiding device (46) being arranged on the ferrule (32) and at least one second guiding device (44) being arranged on the printed circuit board (10, 12), the first and second guiding devices (46, 44) being so formed that, in co-operation, they cause the second core (28) and the first core (18) to be positioned in axial alignment in at least one direction in space, the second guiding device (44) being made of the same material as the polymer light guide (14, 16, 18).

2. Optical coupling system according to claim 1, **characterised in that** the second light guide (28, 30) is a light guide, and in particular a glass-fibre or polymer-fibre light guide, which is external to the printed circuit board (10, 12) and which has a sheath (30) and a light-guide core (28).

3. Optical coupling system according to at least one of the preceding claims, **characterised in that** the second core (28) is freed of the second sheath (30) at the predetermined axial portion (23) in such a way that a first surface (36) of the second core (28), which first surface (36) was originally adjacent the second sheath (30), is exposed, and the first light guide (14, 16, 18) is freed of the first core (18) and of a part of the first sheath (14, 16) in such a way that a remaining part (14) of the first sheath (14, 16), having a second surface (24) which was originally adjacent the first core (18), is exposed, the second core (28) bearing against the second surface (24) of the second sheath (14) by the first surface (36).

4. Optical coupling system according to at least one of the preceding claims, **characterised in that** the first core (18) is freed of the first sheath (14, 16) over at least a part (22) of the predetermined axial portion (23) in such a way that a third surface of the first core (18), which third surface was originally adjacent the first sheath (14, 16), is exposed, and the second light guide (28, 30) is freed of the second core (28) and of a part of the second sheath (30) in such a way that a remaining part of the second sheath (30) of the second light guide (28, 30), which has a fourth surface which was originally adjacent the second core (28), is exposed, the first core (18) bearing against the fourth surface of the second sheath (30) of the second light guide (28, 30) by the third surface.

## Revendications

1. Système de couplage optique pour coupler un premier guide d'onde (14, 16, 18) qui comprend un premier coeur (18) entouré par un premier manteau (14, 16), avec un second guide d'onde (26) qui comprend un second coeur (28) entouré par un second manteau (30), dans lequel une surface terminale du côté frontal (20) du premier coeur (18) du premier guide d'onde (14, 16, 18) vient buter contre une surface terminale du côté frontal (34) du second coeur (28) du second guide d'onde (28, 30) au niveau d'un emplacement d'accouplement, et le second coeur (28) est aligné avec le premier coeur (18) en direction axiale, dans lequel dans la région de l'emplacement d'accouplement sur au moins une partie (22) d'un tronçon axial prédéterminé (23) le second manteau (30) du second guide d'onde (28, 30) tout comme le premier manteau (16) du premier guide d'onde (14, 16, 18) forment conjointement un [] du guide d'onde dans le tronçon prédéterminé (22), le premier guide d'onde (14, 16, 18) étant un guide d'onde en polymère réalisé sur une carte à circuits, qui comprend un coeur en polymère (18) entouré par un manteau en polymère (14, 16),
**caractérisé en ce que** le second guide d'onde (28, 30) est noyé dans une virole (32), avec au moins un premier dispositif de guidage (46) agencé sur la virole (38), et au moins un second dispositif de guidage (44) agencé sur la carte à circuits (10, 12), dans lequel le premier et le second dispositif de guidage (46, 44) sont réalisés de telle manière que ceux-ci établissent en coopération un positionnement en alignement axial du second coeur (28) et du premier coeur (18) dans au moins une direction dans l'espace, et le second dispositif de guidage (44) est fabriqué du même matériau que le guide d'onde en polymère (14, 16, 18).

2. Système de couplage optique selon la revendication 1, **caractérisé en ce que** le second guide d'onde (28, 30) est un guide d'onde extérieur par rapport à la carte à circuits (10, 12) avec un manteau (30) et avec un coeur (28) de guide d'onde, en particulier un guide d'onde en fibres de verre ou en fibres de polymère.

3. Système de couplage optique selon l'une au moins des revendications précédentes, **caractérisé en ce que**, dans le tronçon axial prédéterminé (23), le second coeur (28) est dépouillé du second manteau (30) de telle manière qu'une première surface (36) du second coeur (28), initialement tournée vers le second manteau (30), est à nu, et le premier guide d'onde (14, 16, 18) est dépouillé d'une partie du premier manteau (14, 16) et du premier coeur (18) de telle manière qu'une partie restante (14) du premier manteau (14, 16) est à nu avec une seconde surface (24), initialement tournée vers le premier coeur (18), et le second coeur (28) vient buter avec la première surface (36) contre la seconde surface (24) du premier manteau (14).

4. Système de couplage optique selon l'une au moins des revendications précédentes, **caractérisé en ce que** dans au moins une partie (22) du tronçon axial prédéterminé (23), le premier coeur (18) est dépouillé du premier manteau (14, 16) de telle manière qu'une troisième surface, initialement tournée vers le premier manteau (14, 16), du premier coeur (18) est à nu, et le second guide d'onde (28, 30) est dépouillé d'une partie du second manteau (30) et du second coeur (28), de telle manière qu'une partie restante du second manteau (30) du second guide d'onde (28, 30) est à nu avec une quatrième surface initialement tournée vers le second coeur (28), et le premier coeur (18) vient buter avec la troisième surface contre la quatrième surface du second manteau (30) du second guide d'onde (28, 30).
